# DEMANDE DE BREVET EUROPEEN

(11) **EP 4 478 220 A1**
(43) Date de publication de la demande: **18.12.2024**
(21) Numéro de dépôt: 24180390.7
(22) Date de dépôt: 06.06.2024
(51) Int. Cl.: G06F 18/214, G06F 18/2411, G06F 18/243, G06F 18/20

(54) **PROCÉDÉ D ÉLABORATION D'UN MODÈLE DE CLASSIFICATION**

(30) Priorité: 14.06.2023 FR 2306062
(71) Demandeur: STMicroelectronics International N.V., 1228 Plan-les-Ouates, Geneva (CH)
(72) Inventeur: HUANG, He, 75011 Paris (FR)
(74) Mandataire: Casalonga

(57) **Abrégé**

Selon un aspect, il est proposé un procédé mis en oeuvre par ordinateur d'élaboration d'un modèle de classification, dit modèle de classification final, le procédé comprenant :
- une obtention (20) d'au moins un groupe de signaux de série temporelle initiaux associés à au moins un paramètre d'acquisition initial,
- une élaboration (21) d'au moins un groupe de signaux de série temporelle simulés à partir dudit au moins un groupe de signaux de série temporelle initiaux,
- une élaboration (23) de différents modèles de classification de test, à partir des groupes de signaux de série temporelle initiaux ou simulés,
- une évaluation (24) de performances de chaque modèle de classification de test, puis
- une obtention (26) d'au moins un groupe de signaux de série temporelle finaux associés à au moins un paramètre d'acquisition final, puis
- une élaboration (28) dudit modèle de classification final.

## Description

Des modes de réalisation et de mise en oeuvre concernent la classification de signaux de série temporelle.

Des ordinateurs peuvent utiliser des modèles de classification pour classer des données dans des catégories ou des groupes en fonction de certaines caractéristiques. Il existe plusieurs types de modèle de classification. Chaque type de modèle de classification présente ses propres avantages et inconvénients en fonction du type de données à classer.

Les modèles de classification incluent notamment les arbres de décision, les réseaux de neurones, les modèles de classification basés sur les voisins, telles que le k-plus proches voisins (KNN), et les machines à vecteurs de support (SVM).

Les modèles de classification peuvent être utilisés pour des signaux de série temporelle. Les signaux de série temporelle sont des données qui évoluent au fil du temps et contiennent une mesure ou une observation à chaque instant d'acquisition.

Un signal de série temporelle peut par exemple correspondre à un signal audio, un signal vidéo, un signal de vibration ou bien un signal physiologique.

En particulier, les signaux de série temporelle peuvent être acquis selon différents paramètres d'acquisition. Par exemple, les signaux de série temporelle peuvent être acquis selon une fréquence d'échantillonnage et une quantité de données définies par un utilisateur.

La fréquence d'échantillonnage correspond à un nombre d'échantillons de données du signal de série temporelle par unité de temps. Plus la fréquence d'échantillonnage est élevée pour une même quantité de données plus la résolution des signaux de série temporelle dans le domaine temporel est élevée, cette résolution correspondant à la valeur de la fréquence d'échantillonnage divisée par la quantité de données. À l'inverse, une fréquence d'échantillonnage plus basse pour une même quantité de données peut déformer les signaux de série temporelle.

La quantité de données correspond au nombre de données du signal de série temporelle acquises lors de l'acquisition. Cette quantité de données est définie en indiquant une taille de mémoire tampon (« buffer ») du dispositif d'acquisition à utiliser pour l'acquisition des signaux de série temporelle. Plus la quantité de données est importante pour une même fréquence d'échantillonnage plus il est possible d'observer des détails plus fins du signal de série temporelle dans le domaine fréquentiel.

En outre, il convient de définir la quantité de données en fonction de la fréquence d'échantillonnage. En effet, si la fréquence d'échantillonnage est trop élevée et que la quantité de données est trop faible, alors la durée de l'acquisition peut être trop courte pour acquérir suffisamment d'informations dans le signal de série temporelle.

À une fréquence d'échantillonnage données, plus la quantité de données est élevées plus la durée de l'acquisition l'est aussi. Cela permet d'observer plus de comportements dans le signal de série temporelle acquis mais cela entraîne également une plus grande consommation d'énergie, un temps d'attente plus long pour acquérir le signal de série temporelle et une occupation plus importante de la mémoire pour stocker les données acquises.

Un modèle de classification est entraîné à partir de signaux de série temporelle acquis. La fréquence d'échantillonnage et la quantité de données ont un impact sur le modèle de classification entraîné.

En particulier, le modèle de classification présente des performances qui peuvent varier selon la fréquence d'échantillonnage et de la quantité de données utilisées pour l'acquisition des signaux de série temporelle fournis pour entraîner ce modèle de classification.

Les performances d'un modèle de classification sont notamment définies au regard d'une précision du modèle de classification, d'une durée d'acquisition du signal de série temporelle à utiliser pour le modèle de classification (qui impacte la consommation d'énergie de l'acquisition et le temps d'attente pour acquérir le signal de série temporelle) ainsi que de la quantité de données définie pour l'acquisition du signal de série temporelle (qui impacte l'occupation de la mémoire pour le stockage des données acquises).

Ainsi, il est avantageux de définir la fréquence d'échantillonnage et la quantité de données permettant d'obtenir un modèle de classification présentant des performances optimales au regard des besoins de l'utilisateur.

Classiquement, l'utilisateur réalise plusieurs acquisitions à des fréquences d'échantillonnage différentes et avec des quantités de données différentes afin de tester quelle combinaison de fréquence d'échantillonnage et de quantité de données permet d'obtenir un modèle de classification ayant des performances optimales.

L'utilisateur procède donc à une recherche par tâtonnement pour déterminer la combinaison de fréquence d'échantillonnage et de quantité de données permettant d'obtenir un modèle de classification ayant des performances optimales.

Cette recherche par tâtonnement requiert d'effectuer plusieurs acquisitions de signaux de série temporelle. Ces acquisitions de signaux de série temporelle présentent les inconvénients d'être chronophages et coûteuses. En outre, la recherche par tâtonnement n'assure pas d'obtenir un modèle de classification ayant des performances optimales.

Ainsi, il existe un besoin de proposer une solution permettant de faciliter la recherche de paramètres d'acquisition pour l'acquisition des signaux de série temporelle utilisés pour entraîner un modèle de classification.

Selon un aspect, il est proposé un procédé mis en oeuvre par ordinateur d'élaboration d'un modèle de classification, dit modèle de classification final, le procédé comprenant :
- une obtention d'au moins un groupe de signaux de série temporelle initiaux, lesdits signaux de série temporelle initiaux étant associés à au moins un paramètre d'acquisition initial,
- une élaboration d'au moins un groupe de signaux de série temporelle simulés à partir dudit au moins un groupe de signaux de série temporelle initiaux, lesdits signaux de série temporelle simulés de chaque groupe étant associés à au moins un paramètre d'acquisition simulé différent dudit au moins un paramètre d'acquisition initial,

- une élaboration de différents modèles de classification de test, chaque modèle de classification de test étant élaboré à partir dudit au moins un groupe de signaux de série temporelle initiaux ou dudit au moins un groupe de signaux de série temporelle simulés, chaque modèle de classification de test étant associé audit au moins un paramètre d'acquisition correspondant audit au moins un paramètre d'acquisition initial ou simulé associé aux signaux de série temporelle initiaux ou simulés utilisés pour élaborer ce modèle de classification de test,
- une évaluation de performances de chaque modèle de classification de test, lesdites performances étant associées audit au moins un paramètre d'acquisition de ce modèle de classification de test, puis
- une obtention d'au moins un groupe de signaux de série temporelle finaux associés à au moins un paramètre d'acquisition final sélectionné à partir d'une analyse desdites performances évaluées de chaque modèle de classification de test, puis
- une élaboration dudit modèle de classification final à partir dudit au moins un groupe de signaux de série temporelle finaux.

Un tel procédé permet de simplifier la détermination des paramètres d'acquisition à appliquer pour l'acquisition des signaux de série temporelle finaux utilisés pour l'élaboration du modèle de classification final.

En effet, l'acquisition de signaux de série temporelle initiaux est réalisée par un dispositif d'acquisition, tel qu'un capteur, selon au moins un paramètre d'acquisition initiale. Les performances des modèles de classification de test sont ensuite évaluées à partir de signaux de série temporelle initiaux simulés et non pas acquis par le dispositif d'acquisition.

Les paramètres d'acquisition à appliquer pour l'acquisition des signaux de série temporelle finaux sont donc déterminés à partir d'une analyse des performances mises en relation avec les paramètres d'acquisition associés aux signaux de série temporelle simulés.

En particulier, les paramètres d'acquisition à appliquer pour l'acquisition des signaux de série temporelle finaux peuvent être choisis en analysant quels paramètres d'acquisition permettent d'obtenir des performances optimales au regard de critères de performances définis par l'utilisateur.

Cela permet d'éviter d'effectuer une acquisition de signaux de série temporelle avec différents paramètres d'acquisition pour déterminer quels paramètres d'acquisition permettent d'élaborer un modèle de classification ayant des performances optimales au regard de critères de performances définis par l'utilisateur.

En simplifiant la recherche dudit au moins un paramètre d'acquisition final, un tel procédé permet ainsi de réduire un coût global de l'élaboration du modèle de classification final car ce dernier peut être obtenu plus simplement et plus rapidement.

Dans un mode de mise en oeuvre avantageux, ledit au moins un paramètre d'acquisition initial comprend une combinaison d'une fréquence d'échantillonnage initiale et d'une quantité de données initiale des signaux de série temporelle initiaux.

Avantageusement, ladite fréquence d'échantillonnage initiale correspond à une fréquence d'échantillonnage maximale permise par un dispositif d'acquisition utilisé pour acquérir lesdits signaux de série temporelle initiaux.

De préférence, ladite quantité de données initiale correspond à une quantité de données maximale permise par un dispositif d'acquisition utilisé pour acquérir lesdits signaux de série temporelle initiaux.

Dans un mode de mise en oeuvre avantageux, ledit au moins un paramètre d'acquisition simulé desdits signaux de série temporelle simulés de chaque groupe comprend une fréquence d'échantillonnage simulée inférieure ou égale à ladite fréquence d'échantillonnage initiale et une quantité de données simulées inférieure ou égale à ladite quantité de données initiale.

Avantageusement, chaque groupe de signaux de série temporelle initiaux est associé à une classe indiquée lors de ladite obtention des signaux de série temporelle initiaux.

Dans un mode de mise en oeuvre avantageux, chaque groupe de signaux de série temporelle simulé est associé à la classe indiquée pour le groupe de signaux de série temporelle initiaux à partir duquel ce groupe de signaux de série temporelle simulés est élaboré.

De préférence, le procédé comprend en outre une extraction de valeurs de caractéristiques des signaux de série temporelle initiaux et simulés, chaque modèle de classification de test étant élaboré à partir d'une analyse des valeurs de caractéristiques extraites et de la classe associée à chaque groupe de signaux de série temporelle initiaux ou simulés utilisé pour élaborer ce modèle de classification de test.

Dans un mode de mise en oeuvre avantageux, le procédé comprend en outre une extraction de valeurs de caractéristiques des signaux de série temporelle finaux, le modèle de classification final étant élaboré à partir d'une analyse des valeurs de caractéristiques extraites et de la classe associée à chaque groupe de signaux de série temporelle finaux.

De préférence, le procédé comprend en outre une indication des performances de chaque modèle de classification de test en relation avec ledit au moins un paramètre d'acquisition associé à ce modèle de classification de test.

Avantageusement, ladite indication des performances de chaque modèle de classification comprend un affichage sur un écran d'un graphique de performances comportant lesdites performances de chaque modèle de classification selon ledit au moins un paramètre d'acquisition associé.

Dans un mode de mise en oeuvre avantageux, lesdites performances évaluées de chaque modèle de classification de test comprennent une précision, un temps d'acquisition d'un signal de série temporelle et une quantité de données acquises pour ce signal de série temporelle.

Avantageusement, le procédé comprend en outre une élaboration d'un produit programme d'ordinateur comprenant des instructions qui, lorsque le programme est exécuté par un ordinateur, conduisent celui-ci à mettre en oeuvre le modèle de classification final.

Selon un autre aspect, il est proposé un produit programme d'ordinateur comprenant des instructions qui, lorsque le programme est exécuté par un ordinateur, conduisent celui-ci à mettre en oeuvre le procédé d'élaboration d'un modèle de classification tel que décrit précédemment.

Selon un autre aspect, il est proposé un système informatique comprenant :
- une mémoire comprenant un produit programme d'ordinateur comprenant des instructions qui, lorsque le programme est exécuté par un ordinateur, conduisent celui-ci à mettre en oeuvre le procédé d'élaboration d'un modèle de classification tel que décrit précédemment,
- une unité de traitement configurée pour exécuter ledit produit programme d'ordinateur.

D'autres avantages et caractéristiques de l'invention apparaîtront à l'examen de la description détaillée de modes de réalisation, nullement limitatifs, et des dessins annexés sur lesquels :
[Fig 1]
[Fig 2]

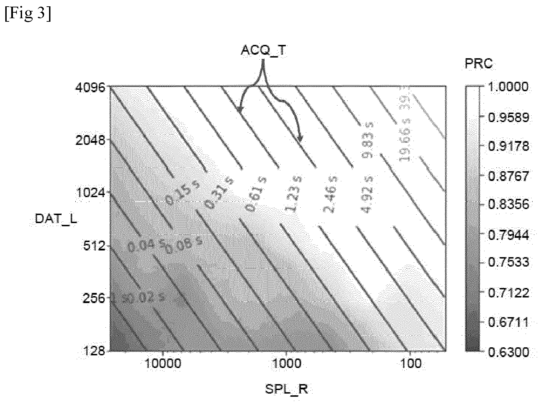

[Fig 3] illustrent des modes de réalisation et de mise en oeuvre de l'invention.

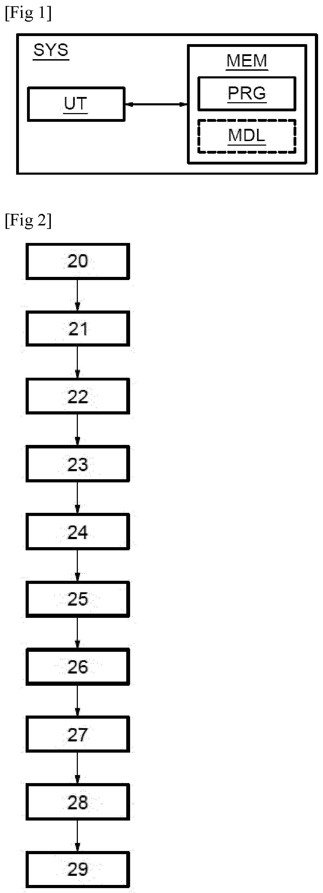

La figure 1 illustre un mode de réalisation d'un système informatique SYS configuré pour mettre en oeuvre un procédé d'élaboration d'un modèle de classification.

Le système informatique SYS comprend une unité de traitement UT et une mémoire MEM. Un tel système informatique SYS peut être un ordinateur personnel ou bien un serveur par exemple.

La mémoire MEM comporte un programme d'ordinateur PRG comprenant des instructions qui, lorsque le programme PRG est exécuté par l'unité de traitement UT du système informatique SYS, conduisent celle-ci à mettre en oeuvre le procédé d'élaboration d'un modèle de classification MDL, tel que décrit dans la suite.

La mémoire MEM est également configurée pour stocker des signaux de série temporelle. Ces signaux de série temporelle servent de données d'apprentissage pour élaborer le modèle de classification MDL.

Les signaux de série temporelle peuvent être fournies par un utilisateur du système informatique SYS souhaitant définir un modèle de classification à partir de ces signaux de série temporelle.

Les signaux de série temporelle peuvent être acquis par des capteurs puis fournies au système informatique SYS. Un signal de série temporelle peut par exemple correspondre à un signal audio, un signal de vibration ou bien un signal physiologique. Les signaux de série temporelle acquis comprennent un ensemble de données acquises dans le temps. Les signaux de série temporelle peuvent comprendre plusieurs lignes de données.

Les signaux de série temporelle sont associés à différentes classes. Une classe est un groupe de données qui ont des caractéristiques similaires et qui sont regroupées ensemble en fonction de ces caractéri sti ques.

Ainsi, les signaux de série temporelle sont divisés en plusieurs groupes de signaux de série temporelle, chaque groupe de signaux de série temporelle étant associé à une classe indiquée par l'utilisateur.

Par exemple, un groupe de signaux de série temporelle peut être associé à une classe correspondant à des signaux correspondant à un fonctionnement normal, et un autre groupe de signaux de série temporelle peut être associé à une classe correspondant à des signaux d'anomalies.

L'unité de traitement UT est configurée pour élaborer un modèle de classification MDL en mettant en oeuvre ledit procédé d'élaboration. En particulier, l'unité de traitement UT est configurée pour élaborer un modèle de classification MDL en exécutant le programme d'ordinateur PRG en prenant en entrée des signaux de série temporelle.

Les signaux de série temporelle sont acquis par un dispositif d'acquisition (non représenté). Ce dispositif d'acquisition est configuré pour effectuer une acquisition selon au moins un paramètre d'acquisition défini par l'utilisateur, tel qu'une fréquence d'échantillonnage et une quantité de données des signaux de série temporelle.

La fréquence d'échantillonnage correspond à un nombre d'échantillons de données du signal de série temporelle par unité de temps. Plus la fréquence d'échantillonnage est élevée pour une même quantité de données plus la résolution des signaux de série temporelle dans le domaine temporel est élevée, cette résolution correspondant à la valeur de la fréquence d'échantillonnage divisée par la quantité de données. À l'inverse, une fréquence d'échantillonnage plus basse pour une même quantité de données peut déformer les signaux de série temporelle.

La quantité de données correspond au nombre de données du signal de série temporelle acquises lors de l'acquisition. Cette quantité de données est définie en indiquant une taille de mémoire tampon (« buffer ») du dispositif d'acquisition à utiliser pour l'acquisition des signaux de série temporelle. Plus la quantité de données est importante pour une même fréquence d'échantillonnage plus il est possible d'observer des détails plus fins du signal de série temporelle dans le domaine fréquentiel.

En outre, il convient de définir la quantité de données en fonction de la fréquence d'échantillonnage. En effet, si la fréquence d'échantillonnage est trop élevée et que la quantité de données est trop faible, alors la durée de l'acquisition peut être trop courte pour acquérir suffisamment d'informations dans le signal de série temporelle.

À une fréquence d'échantillonnage données, plus la quantité de données est élevées plus la durée de l'acquisition l'est aussi. Cela permet d'obtenir plus d'observer plus de comportements dans le signal de série temporelle acquis mais cela entraîne également une plus grande consommation d'énergie, un temps d'attente plus long pour acquérir le signal de série temporelle et une occupation plus importante de la mémoire pour stocker les données acquises.

Le dispositif d'acquisition permet à l'utilisateur de choisir une fréquence d'échantillonnage inférieure ou égale à une fréquence d'échantillonnage maximale permise par ce dispositif d'acquisition. Le dispositif d'acquisition permet à l'utilisateur de choisir une quantité de données inférieure ou égale à une quantité de données maximale permise par ce dispositif d'acquisition.

La figure 2 illustre un mode de mise en oeuvre d'un procédé mis en oeuvre par ordinateur d'élaboration d'un modèle de classification de signaux de série temporelle.

Le procédé vise à aider un choix d'au moins un paramètre d'acquisition pour l'acquisition des signaux de série temporelle à utiliser pour l'élaboration du modèle de classification MDL.

Par exemple, le procédé vise à aider un choix d'une combinaison de fréquence d'échantillonnage et de quantité de données pour l'acquisition de ces signaux de série temporelle.

Le procédé comprend une obtention 20 d'au moins un groupe de signaux de série temporelle initiaux.

Les signaux de série temporelle initiaux sont acquis avec une fréquence d'échantillonnage maximale permise par le dispositif d'acquisition. Les signaux de série temporelle initiaux sont également acquis avec une quantité de données maximale permise par le dispositif d'acquisition.

De la sorte les signaux de série temporelle initiaux sont suffisamment précis pour distinguer les différentes classes qui leurs sont associées.

Le procédé comprend ensuite une élaboration 21 d'au moins un groupe de signaux de série temporelle simulés à partir desdits signaux de série temporelle initiaux. Des signaux de série temporelle simulés sont ainsi obtenus pour les différentes classes étudiées. Les signaux de série temporelle simulés permettre de simuler des acquisitions de signaux de série temporelle avec des paramètres d'acquisition différents de ceux utilisés pour acquérir les signaux de série temporelle initiaux.

En particulier, les signaux de série temporelle simulés sont élaborés avec différentes fréquences d'échantillonnage inférieures ou égales à ladite fréquence d'échantillonnage maximale.

Les signaux de série temporelle simulés sont également élaborés avec différentes quantités de données qui sont inférieures ou égales à ladite quantité maximale de données.

Plus particulièrement, chaque signal de série temporelle simulé reprend des données du signal de série temporelle initial. L'utilisation d'une fréquence d'échantillonnage inférieure à la fréquence d'échantillonnage maximale permet de garder qu'une partie des données du signal de série temporelle. L'utilisation d'une quantité de données inférieure à la quantité de données maximale permet de réduire la quantité de données dans le signal de série temporelle simulé par rapport au signal de série temporelle initial. Chaque signal de série temporelle simulé peut présenter des données du signal de série temporelle initial qui sont répétées dans le signal de série temporelle simulé. Chaque signal de série temporelle simulé peut également présenter un nombre de lignes différents du signal de série temporelle initial. Chaque ligne comporte alors une même quantité de données. Afin d'évaluer les modèles de classification de test décrits dans la suite, il peut être important d'avoir un nombre de lignes suffisant pour chaque classe. Par exemple, il peut être avantageux d'utiliser un minimum de cent lignes par classe.

Les signaux de série temporelle simulés sont utilisés pour évaluer l'impact des fréquences d'échantillonnage et des quantités de données sur la précision de la classification.

En particulier, le procédé comprend une extraction 22 de valeurs des caractéristiques prises en compte pour la classification des signaux de série temporelle initiaux et des signaux de série temporelle simulés.

Par exemple, les caractéristiques des signaux de série temporelle peuvent comprendre des amplitudes, des fréquences, des durées, des minimums, des maximums, des moyennes, des écart-types, etc.

Le procédé comprend ensuite, pour chaque groupe de signaux de série temporelle, une élaboration 23 d'un modèle de classification de test. Chaque modèle de classification de test est élaboré à partir des valeurs extraites des caractéristiques des signaux de série temporelle utilisés pour élaborer ce modèle de classification.

Le modèle de classification de test est de préférence élaboré en utilisant des méthodes relativement rapides. Par exemple, il est possible d'élaborer un modèle de classification de test en utilisant un arbre de décision, une forêt d'arbres décisionnels (en anglais « random forest classifier », une machine à vecteurs de support (en anglais « support-vector machine », « SVM ») ou une méthode des k plus proches voisins (également désigné par l'acronyme « KNN » de l'anglais « k-nearest neighbors »). Les modèles de classification de test peuvent ainsi être élaborés sans effectuer de validation croisée ou sans diviser les signaux de série temporelle initiaux en un ensemble de signaux d'apprentissage et en un ensemble de signaux de test.

Chaque modèle de classification de test est associé à une fréquence d'échantillonnage et à une quantité de données correspondant à la fréquence d'échantillonnage et à la quantité de données des signaux de série temporelle utilisés pour élaborer ce modèle de classification de test.

Ensuite, le procédé comprend une évaluation 24 des performances de chaque modèle de classification de test. En particulier, l'évaluation des performances de chaque modèle de classification de test comprend une détermination de la précision de ce modèle de classification de test.

La précision du modèle de classification de test est déterminée en comparant la classe identifiée par le modèle de classification de test à la classe renseignée par l'utilisateur lors de l'acquisition des signaux de série temporelle initiaux.

L'évaluation des performances de chaque modèle de classification de test comprend également une détermination du temps d'acquisition des signaux de série temporelle.

L'évaluation des performances de chaque modèle de classification de test peut comprendre un calcul d'un score. Ce score est alors calculé en fonction des différents critères de performances à évaluer. Par exemple, le score de performances de chaque modèle de classification de test peut être calculé en fonction de la précision de ce modèle de classification de test, du temps d'acquisition et de la quantité de données associés à ce modèle de classification de test. Ce score de performances peut notamment être défini par une pondération des différents critères de performances évalués. L'utilisateur peut également définir des contraintes de test telles qu'une durée maximum d'acquisition et/ou une quantité de données maximum par ligne.

Le procédé comprend ensuite une indication 25 des performances de chaque modèle de classification de test élaboré en relation avec la fréquence d'échantillonnage et la quantité de données associées à ce modèle de classification de test.

Par exemple, lesdites performances peuvent être affichées sur un écran du système informatique SYS. Un graphique de performances peut par exemple être élaborée par le système informatique puis affichée sur ledit écran.

Un exemple d'un tel graphique de performances est illustré à la figure 3. Le graphique de performances montre les performances par rapport à la précision PRC et au temps d'acquisition ACQ_T des signaux de série temporelle selon les fréquences d'échantillonnage SPL_R (en Hz) et les quantités des données DAT_L (en nombre de bits) associées à ces modèles.

À partir des performances indiquées, l'utilisateur peut sélectionner les paramètres d'acquisition à utiliser pour acquérir des signaux de série temporelle finaux.

En particulier, l'utilisateur peut choisir la fréquence d'échantillonnage et la quantité de données associées au modèle de classification ayant obtenue une performance optimale au regard des besoins de l'utilisateur. De préférence, cette sélection est réalisée automatiquement à partir de critères renseignés par l'utilisateur. En variante, il est possible de suggérer à l'utilisateur certaines combinaisons de fréquence d'échantillonnage et de quantité de données obtenant les meilleures performances.

L'utilisateur peut ensuite utiliser le dispositif d'acquisition pour acquérir des groupes de signaux de série temporelle finaux associés aux différentes classes définies. Ces signaux de série temporelle finaux sont acquis en utilisant la combinaison de fréquence d'échantillonnage et de quantité de données sélectionnée.

Le procédé comprend ensuite une obtention 26 de ces signaux de série temporelle finaux. En particulier, ces signaux de série temporelle finaux sont fournis en entrée du programme d'ordinateur PRG.

Le procédé comprend ensuite une extraction 27de valeurs des caractéristiques des signaux de série temporelle finaux.

Le procédé comprend ensuite une élaboration 28 d'un modèle de classification final à partir de ces signaux de série temporelle finaux.

En particulier, le modèle de classification final est élaboré à partir des valeurs extraites des caractéristiques des signaux de série temporelle finaux utilisés pour élaborer ce modèle de classification. Le modèle de classification peut être obtenu par des méthodes différentes que celle utilisée pour élaborer les modèles de classification de test. Par exemple, le modèle de classification final peut être élaboré à partir d'une méthode plus avancée que celle utilisée pour élaborer les modèles de classification de test. Cela permet d'obtenir un modèle de classification final plus précis. En particulier, le modèle de classification final peut être un réseau de neurones artificiel.

Le procédé comprend ensuite une élaboration 29 d'un programme d'ordinateur comprenant des instructions qui, lorsque le programme est exécuté par un ordinateur, conduisent celui-ci à mettre en oeuvre le modèle de classification final.

Un tel programme d'ordinateur peut ensuite être utilisé par un ordinateur, par exemple par un microcontrôleur pour réaliser une classification de signaux de série temporelle de même type que ceux utilisés pour entraîner le modèle de classification final en utilisant le modèle de classification final.

Plus particulièrement, les critères de performance définis par l'utilisateur utilisés pour analyser les performances des modèles de classification de test peuvent être choisis en fonction de l'ordinateur qui exécutera le modèle de classification final.

Un tel procédé permet de simplifier la recherche d'une combinaison de fréquence d'échantillonnage et de quantité de données pour l'acquisition des signaux de série temporelle finaux utilisés pour l'élaboration du modèle de classification final.

En effet, l'acquisition de signaux de série temporelle initiaux est réalisée selon une seule combinaison de fréquence d'échantillonnage et de quantité de données. Les performances des modèles de classification de test sont ensuite évaluées à partir de signaux de série temporelle simulés et non pas acquis par ledit dispositif d'acquisition.

En simplifiant la recherche de la combinaison de fréquence d'échantillonnage et de quantité de données pour l'acquisition des signaux de série temporelle finaux, un tel procédé permet également de réduire un coût global de l'élaboration du modèle de classification final car ce dernier peut être obtenu plus rapidement.

Un tel procédé présente également l'avantage de pouvoir être entièrement automatisé. Dans ce cas, la sélection finale de la combinaison de fréquence d'échantillonnage et de la quantité de données est effectuée automatiquement selon des critères de performances renseignés par l'utilisateur.

## Revendications

1. Procédé mis en oeuvre par ordinateur d'élaboration d'un modèle de classification, dit modèle de classification final, le procédé comprenant :
- une obtention (20) d'au moins un groupe de signaux de série temporelle initiaux, lesdits signaux de série temporelle initiaux étant associés à au moins un paramètre d'acquisition initial,
- une élaboration (21) d'au moins un groupe de signaux de série temporelle simulés à partir dudit au moins un groupe de signaux de série temporelle initiaux, lesdits signaux de série temporelle simulés de chaque groupe étant associés à au moins un paramètre d'acquisition simulé différent dudit au moins un paramètre d'acquisition initial,
- une élaboration (23) de différents modèles de classification de test, chaque modèle de classification de test étant élaboré à partir dudit au moins un groupe de signaux de série temporelle initiaux ou dudit au moins un groupe de signaux de série temporelle simulés, chaque modèle de classification de test étant associé audit au moins un paramètre d'acquisition correspondant audit au moins un paramètre d'acquisition initial ou simulé associé aux signaux de série temporelle initiaux ou simulés utilisés pour élaborer ce modèle de classification de test,
- une évaluation (24) de performances de chaque modèle de classification de test, lesdites performances étant associées audit au moins un paramètre d'acquisition de ce modèle de classification de test, puis
- une obtention (26) d'au moins un groupe de signaux de série temporelle finaux associés à au moins un paramètre d'acquisition final sélectionné à partir d'une analyse desdites performances évaluées de chaque modèle de classification de test, puis
- une élaboration (28) dudit modèle de classification final à partir dudit au moins un groupe de signaux de série temporelle finaux.

2. Procédé selon la revendication 1, dans lequel ledit au moins un paramètre d'acquisition initial comprend une combinaison d'une fréquence d'échantillonnage initiale et d'une quantité de données initiale des signaux de série temporelle initiaux.

3. Procédé selon la revendication 2, dans lequel ladite fréquence d'échantillonnage initiale correspond à une fréquence d'échantillonnage maximale permise par un dispositif d'acquisition utilisé pour acquérir lesdits signaux de série temporelle initiaux.

4. Procédé selon l'une des revendications 2 ou 3, dans lequel ladite quantité de données initiale correspond à une quantité de données maximale permise par un dispositif d'acquisition utilisé pour acquérir lesdits signaux de série temporelle initiaux.

5. Procédé selon l'une des revendications 2 à 4, dans lequel ledit au moins un paramètre d'acquisition simulé desdits signaux de série temporelle simulés de chaque groupe comprend une fréquence d'échantillonnage simulée inférieure ou égale à ladite fréquence d'échantillonnage initiale et une quantité de données simulées inférieure ou égale à ladite quantité de données initiale.

6. Procédé selon l'une des revendications 1 à 5, dans lequel chaque groupe de signaux de série temporelle initiaux est associé à une classe indiquée lors de ladite obtention des signaux de série temporelle initiaux.

7. Procédé selon la revendication 6, dans lequel chaque groupe de signaux de série temporelle simulé est associé à la classe indiquée pour le groupe de signaux de série temporelle initiaux à partir duquel ce groupe de signaux de série temporelle simulés est élaboré.

8. Procédé selon la revendication 7, comprenant en outre une extraction (22) de valeurs de caractéristiques des signaux de série temporelle initiaux et simulés, chaque modèle de classification de test étant élaboré à partir d'une analyse des valeurs de caractéristiques extraites et de la classe associée à chaque groupe de signaux de série temporelle initiaux ou simulés utilisé pour élaborer ce modèle de classification de test.

9. Procédé selon la revendication 8, comprenant en outre une extraction (27) de valeurs de caractéristiques des signaux de série temporelle finaux, le modèle de classification final étant élaboré à partir d'une analyse des valeurs de caractéristiques extraites et de la classe associée à chaque groupe de signaux de série temporelle finaux.

10. Procédé selon l'une des revendications 1 à 9, comprenant en outre une indication (25) des performances de chaque modèle de classification de test en relation avec ledit au moins un paramètre d'acquisition associé à ce modèle de classification de test.

11. Procédé selon la revendication 10, dans lequel ladite indication des performances de chaque modèle de classification comprend un affichage sur un écran d'un graphique de performances comportant lesdites performances de chaque modèle de classification selon ledit au moins un paramètre d'acquisition associé.

12. Procédé selon la revendication 1 à 11, dans lequel lesdites performances évaluées de chaque modèle de classification de test comprennent une précision, un temps d'acquisition d'un signal de série temporelle et une quantité de données acquises pour ce signal de série temporelle.

13. Procédé selon l'une des revendications 1 à 12, comprenant en outre une élaboration (29) d'un produit programme d'ordinateur comprenant des instructions qui, lorsque le programme est exécuté par un ordinateur, conduisent celui-ci à mettre en oeuvre le modèle de classification final.

14. Produit programme d'ordinateur comprenant des instructions qui, lorsque le programme est exécuté par un ordinateur, conduisent celui-ci à mettre en oeuvre un procédé selon l'une des revendications 1 à 13.

15. Système informatique comprenant :
- une mémoire (MEM) comprenant un produit programme d'ordinateur selon la revendication 14,
- une unité de traitement (UT) configurée pour exécuter ledit produit programme d'ordinateur.
